# EUROPÄISCHE PATENTSCHRIFT

(11) **EP 2 791 524 B1**
(45) Veröffentlichungstag und Bekanntmachung des Hinweises auf die Patenterteilung: **10.10.2018**
(21) Anmeldenummer: 12799070.3
(22) Anmeldetag: 06.12.2012
(51) Int. Cl.: F16D 1/12, F16D 3/10, F16H 61/36, F16H 61/32

(54) **SCHALTVORRICHTUNG MIT EINEM DREHFREILAUF FÜR DIE SCHALTWELLE UND KRAFTFAHRZEUG-GETRIEBE MIT EINER SOLCHEN SCHALTVORRICHTUNG**
SHIFT DEVICE HAVING ROTATIONAL FREE TRAVEL FOR THE SHIFT SHAFT, AND MOTOR VEHICLE TRANSMISSION HAVING A SHIFT DEVICE OF SAID TYPE
DISPOSITIF DE CHANGEMENT DE VITESSE POURVU D'UNE ROUE LIBRE ROTATIVE POUR L'ARBRE DE CHANGEMENT DE VITESSE ET BOÎTE DE VITESSES POUR VÉHICULE À MOTEUR POURVUE D'UN TEL DISPOSITIF DE CHANGEMENT DE VITESSE

(30) Priorität: 16.12.2011 DE 102011121481
(43) Veröffentlichungstag der Anmeldung: 22.10.2014
(73) Patentinhaber: Audi AG, 85045 Ingolstadt (DE)
(72) Erfinder: WAGNER, Rupert, 86556 Kühbach (DE)
(74) Vertreter: Wohnert, Dietmar
(86) Internationale Anmeldenummer: PCT/EP2012/005039
(87) Internationale Veröffentlichungsnummer: WO 2013/087170

(56) Entgegenhaltungen:
- EP-A1- 0 281 442
- EP-A1- 1 482 213
- EP-A1- 2 023 020
- DE-A1- 19 901 813
- DE-A1-102006 000 855
- US-A- 5 949 344
- US-A1- 2003 066 369

## Beschreibung

Die Erfindung betrifft eine Schaltvorrichtung für ein Kraftfahrzeug-Getriebe, insbesondere für ein Kraftfahrzeug-Automatikgetriebe, mit einer zum Getriebe führenden Schaltwelle und mit einem Schalthebel zum Betätigen der Schaltwelle, wobei die Schaltwelle und der Schalthebel mittels Steckverzahnungsverbindung miteinander verbunden sind.

Die Erfindung betrifft ferner ein Kraftfahrzeug-Getriebe und insbesondere ein Kraftfahrzeug-Automatikgetriebe mit einer solchen Schaltvorrichtung.

Bei modernen Kraftfahrzeug-Getrieben, wie bspw. bei Shift-by-Wire-Getrieben (wie nachfolgend noch näher erläutert), ist es in bestimmten Betriebssituationen erforderlich, dass sich, trotz der prinzipiell drehfesten Verbindung, die Schaltwelle relativ zu einem feststehenden Schalthebel verdrehen kann.

Aus der Patentschrift EP 1 482 213 A1 ist eine Betätigungseinrichtung für ein Schaltgetriebe mit einem an einer Schaltwelle befestigten Schalthebel bekannt. Um insbesondere hochfrequente Schaltstörungen zu reduzieren ist vorgesehen, dass der Schalthebel zwei koaxial zueinander angeordnete Kupplungshälften aufweist, wobei die innere Kupplungshälfte mit der Schaltwelle verbunden ist, und dass zwischen den beiden Kupplungshälften wenigstens ein elastisches Federelement angeordnet ist. Zum Stand der Technik wird ergänzend auch auf die Patentschriften US 2003/0066369 A1, EP 0 281 442 A1, DE 199 01 813 A1 und EP 2 023 020 A1 hingewiesen.

Der Erfindung liegt die Aufgabe zugrunde, eine Schaltvorrichtung der eingangs genannten Art anzugeben, die mit geringem Aufwand den gegebenen Anforderungen gerecht wird.

Die Lösung der Aufgabe erfolgt mit einer erfindungsgemäßen Schaltvorrichtung für ein Kraftfahrzeug-Getriebe, insbesondere für ein Kraftfahrzeug-Automatikgetriebe, mit einer zum Getriebe führenden Schaltwelle und mit einem Schalthebel zum Betätigen der Schaltwelle, wobei die Schaltwelle und der Schalthebel mittels Steckverzahnungsverbindung miteinander verbunden sind. Erfindungsgemäß ist vorgesehen, dass die Steckverzahnungsverbindung mit einem Drehspiel ausgebildet ist bzw. ein Drehspiel aufweist, wodurch ein bedingter bzw. begrenzter Drehfreilauf der Schaltwelle bei feststehendem Schalthebel mit einem Drehwinkel von 40° bis 60° ermöglicht ist.

Der durch das Drehspiel bzw. Verdrehspiel in der Steckverzahnungsverbindung ermöglichte Drehfreilauf bzw. rotatorische Freilauf erlaubt einerseits ein relatives Verdrehen von Schaltwelle und Schalthebel um einen konstruktiv vorgegebenen maximalen Verdrehwinkel (Freilauffunktion). Anderseits ist aber auch ein Verdrehen der Schaltwelle mit dem Schalthebel und/oder umgekehrt ermöglicht (Mitnahmefunktion). Dies wird nachfolgend noch näher erläutert. Der bedingte Drehfreilauf weist einen Drehwinkel von 40° bis 60° und insbesondere von ca. 50° auf.

Zur Realisierung eines solchen Drehfreilaufs würde man normalerweise ein Freilaufelement oder dergleichen vorsehen müssen. Die erfindungsgemäße Schaltvorrichtung hat jedoch einen Drehfreilauf, ohne dass hierfür zusätzliche Bauteile erforderlich sind. Erfindungsgemäß wird der Drehfreilauf bzw. die Freilauffunktion lediglich durch geschickte Ausgestaltung der Steckverzahnungsverbindung erzielt. Zusammenfassend und mit anderen Worten dargestellt ergibt sich somit durch die Erfindung unter anderem eine Freilauffunktion, ohne jeden Zusatzaufwand und ohne anfallende Mehrkosten.

Bevorzugt ist vorgesehen, dass diese Steckverzahnungsverbindung eine am Schalthebel ausgebildete Innensteckverzahnung und eine an der Schaltwelle ausgebildete Außensteckverzahnung umfasst, wobei die auf einer kreiszylindrischen Kontur basierende Innensteckverzahnung mehrere radial einwärts gerichtete und in Umfangsrichtung zueinander beabstandete Zähne aufweist, und wobei die ebenfalls auf einer kreiszylindrischen Kontur basierende Außensteckverzahnung mehrere radial auswärts gerichtete und ebenfalls in Umfangsrichtung zueinander beabstandete Zähne aufweist. Die einwärts gerichteten bzw. radial nach innen weisenden Zähne bzw. Innenverzahnungselemente der Innensteckverzahnung und die radial auswärts gerichteten bzw. radial nach außen weisenden Zähne bzw. Außenverzahnungselemente der Außensteckverzahnung bilden korrespondierende Steckverzahnungselemente aus, die sich in radialer Richtung überdecken. Infolge der Zwischenräume zwischen den Zähnen bzw. Verzahnungselementen wird der bedingte Drehfreilauf ermöglicht. Die Zwischenräume können auch als Zahnzwischenräume in Umfangsrichtung bezeichnet werden.

Besonders bevorzugt ist vorgesehen, dass die Zähne dieser Innensteckverzahnung und dieser Außensteckverzahnung in Umfangsrichtung mit gleichmäßigen Zwischenräumen angeordnet sind. Die Innensteckverzahnung und die Außensteckverzahnung können jeweils 4 bis 8, vorzugsweise 5 bis 7 und insbesondere 6 Zähne aufweisen.

Die erfindungsgemäße Schaltvorrichtung kann auch einen Schaltsensor (PRND-Sensor) aufweisen, der drehfest mit der Schaltwelle verbunden ist. Bevorzugt ist vorgesehen, dass die Schaltwelle und der Schaltsensor mittels Steckverzahnungsverbindung miteinander verbunden sind, wobei die Steckverzahnungsverbindung eine am Schaltsensor ausgebildete Innensteckverzahnung und eine an der Schaltwelle ausgebildete Außensteckverzahnung umfasst, wobei die auf einer kreiszylindrischen Kontur basierende Innensteckverzahnung mehrere radial auswärts gerichtete und in Umfangsrichtung zueinander beabstandete Kerben aufweist und wobei die ebenfalls auf einer kreiszylindrischen Kontur basierende Außensteckverzahnung mehrere radial auswärts gerichtete und ebenfalls in Umfangsrichtung zueinander beabstandete Zähne aufweist. Die Zähne der Außensteckverzahnung und die Kerben der Innensteckverzahnung sind derart ausgebildet, dass diese formschlüssig und ohne Drehspiel ineinander greifen können.

Insbesondere ist vorgesehen, dass über dieselbe Außensteckverzahnung an der Schaltwelle auch der Schalthebel mit der Schaltwelle verbunden wird, wie obenstehend erläutert. In anderen Worten heißt dies, dass über die selbe Außensteckverzahnung bzw. über den selben Außensteckverzahnungsabschnitt an der Schaltwelle sowohl der Schalthebel mit Drehspiel als auch der Schaltsensor ohne Drehspiel mit der Schaltwelle verbunden werden kann.

Bevorzugt ist vorgesehen, dass eine winkelgenaue Ausrichtung zwischen dem Schaltsensor und der Schaltwelle durch einen an der Außensteckverzahnung ausgebildeten Doppelzahn und eine an der Innensteckverzahnung ausgebildete Doppelkerbe erreicht wird. Der Doppelzahn und die Doppelkerbe können formschlüssig ineinander greifen und so die winkelgenaue Ausrichtung des Schaltsensors auf der Schaltwelle herbeiführen. Der Drehfreilauf zwischen dem Schalthebel und der Schaltwelle wird hierdurch nicht beeinträchtigt.

Mit dem nebengeordneten Anspruch erstreckt sich die Lösung der Aufgabe auch auf ein Kraftfahrzeug-Getriebe, wobei es sich insbesondere um ein Kraftfahrzeug-Automatikgetriebe handelt, dass wenigstens eine erfindungsgemäße Schaltvorrichtung umfasst bzw. aufweist.

Bevorzugt handelt es sich bei dem Kraftfahrzeug-Getriebe bzw. dem Kraftfahrzeug-Automatikgetriebe um ein PKW-Getriebe. Ferner ist bevorzugt vorgesehen, dass es sich bei dem Kraftfahrzeug-Getriebe bzw. dem Kraftfahrzeug-Automatikgetriebe um ein Shift-by-Wire-Getriebe handelt. Bei einem Shift-by-Wire-Getriebe erfolgt das Schalten der Gänge per elektrischen Schaltbefehlen, die über ein Steuergerät verarbeitet werden, das dann die mechanischen Schaltvorgänge über Stellmotoren oder dergleichen vornimmt.

Nachfolgend wird ein Ausführungsbeispiel der Erfindung unter Bezugnahme auf die Figuren näher beschrieben. Aus dieser Beschreibung ergeben sich weitere Merkmale und Vorteile. Konkrete Merkmale dieses Ausführungsbeispiels können allgemeine Merkmale der Erfindung darstellen. Mit anderen Merkmalen verbundene Merkmale dieses Ausführungsbeispiels können auch einzelne Merkmale der Erfindung darstellen.

Es zeigen schematisch und beispielhaft:
- Fig. 1: eine erfindungsgemäße Schaltvorrichtung in einer perspektivischen Explosionsansicht;
- Fig. 2: den zur Schaltvorrichtung der Fig. 1 gehörenden Schalthebel in einer axialen Draufsicht;
- Fig. 3: den zur Schaltvorrichtung der Fig. 1 gehörenden Schaltsensor in einer axialen Draufsicht;
- Fig. 4: das vordere axiale Ende der zur Schaltvorrichtung der Fig. 1 gehörenden Schaltwelle in einer perspektivischen Ansicht; und
- Fig. 5: den über eine Steckverzahnungsverbindung mit der Schaltwelle aus Fig. 4 verbundene Schalthebel aus Fig. 2 in einer axialen Draufsicht.

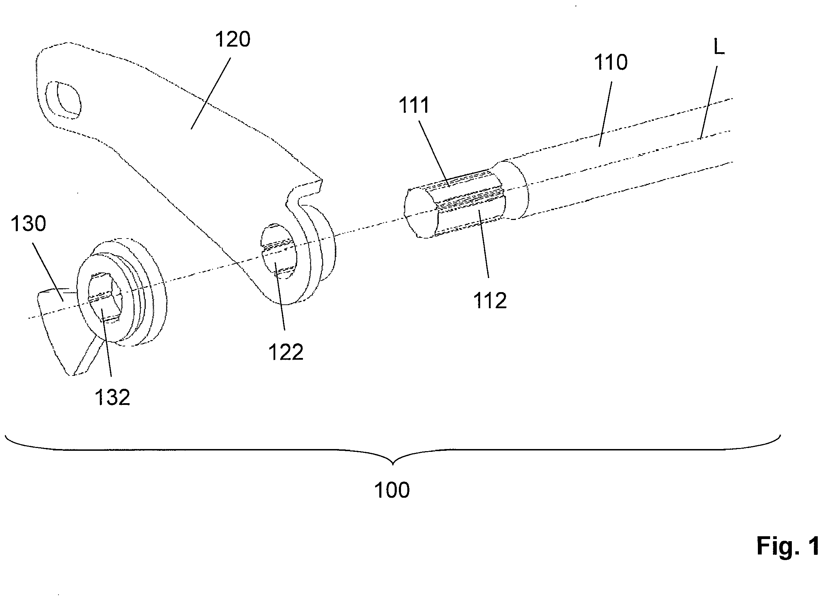

Fig. 1 zeigt eine insgesamt mit 100 bezeichnete erfindungsgemäße Schaltvorrichtung. Die Schaltvorrichtung 100 umfasst eine Schaltwelle 110, einen Schalthebel 120 und einen Schaltsensor bzw. Schaltstellungssensor 130. Die beispielhaft einstückig ausgebildeten Komponenten 110, 120 und 130 sind zur Veranschaulichung vereinzelt dargestellt, indem diese entlang der gemeinsamen Dreh- bzw. Schwenkachse L auseinander gezogen sind.

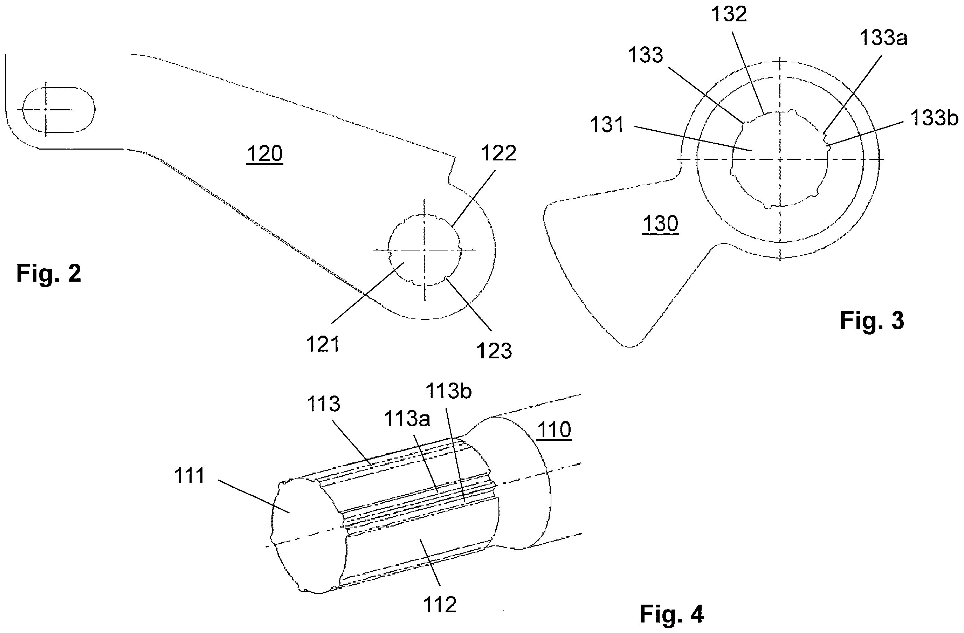

Der Schalthebel 120 und der Schaltsensor 130 können mit der Schaltwelle 110 verbunden werden, wozu diese in Richtung der Achse L auf das vordere axiale Ende 111 der Schaltwelle 110 (wobei es sich insbesondere um das vom Kraftfahrzeug-Getriebe wegweisende axiale Ende handelt) aufgesteckt werden. Die Verbindung erfolgt jeweils über eine Steckverzahnungsverbindung, wozu das vordere axiale Ende 111 der Schaltwelle 110 mit einer Außensteckverzahnung bzw. einem Außensteckverzahnungsabschnitt 112 ausgebildet ist, wie nachfolgend noch näher erläutert. Korrespondierend hierzu ist der Schalthebel 120 mit einer Innensteckverzahnung 122 und der Schaltsensor 130 mit einer Innensteckverzahnung 132 ausgebildet. Die Innensteckverzahnungen 122 und 132 des Schalthebels 120 und des Schaltsensors 130 sind unterschiedlich ausgebildet, wie nachfolgend anhand der Fig. 2 und 3 näher erläutert.

Fig. 2 zeigt den Schalthebel 120 in einer Draufsicht entlang der Achse L. Der Schalthebel 120 weist eine kreiszylindrische Bohrung 121 auf. Die Bohrung 121 ist mit einer Innensteckverzahnung bzw. einem Innensteckverzahnungsabschnitt 122 ausgebildet. Die Innensteckverzahnung 122 weist mehrere Zähne 123 auf, die ausgehend von der Bohrungsinnenwandung bzw. Bohrungskontur radial einwärts gerichtet und in Umfangsrichtung zueinander beabstandet sind. In dem gezeigten Ausführungsbeispiel sind sechs Zähne 123 vorgesehen, die in Umfangsrichtung gleichmäßig verteilt an der Bohrungsinnenwandung angeordnet sind.

Fig. 3 zeigt den Schaltsensor 130 in einer Draufsicht entlang der Achse L. Der Schaltsensor 130 weist eine kreiszylindrische Bohrung 131 auf. Die Bohrung 131 ist ebenfalls mit einer Innensteckverzahnung bzw. einem Inhensteckverzahnungsabschnitt 132 ausgebildet. Anders als die Innensteckverzahnung 122 des Schalthebels 120 weist die Innensteckverzahnung 132 des Schaltsensors 130 mehrere Kerben 133 auf, die ausgehend von der Bohrungsinnenwandung bzw. Bohrungskontur radial auswärts gerichtet und in Umfangsrichtung zueinander beabstandet sind. In dem gezeigten Ausführungsbeispiel sind sechs Kerben 133 vorgesehen, die in Umfangsrichtung gleichmäßig verteilt an der Bohrungsinnenwandung angeordnet sind. Ferner ist eine Doppelkerbe 133a/133b vorgesehen, um den Schaltsensor 130 winkelgenau auf der Schaltwelle 110 anordnen bzw. mit dieser verbinden zu können.

Fig. 4 zeigt das vordere axiale Ende 111 der Schaltwelle 110. Die Schaltwelle 110 ist in diesem Endabschnitt mit einer Außensteckverzahnung bzw. einem Außensteckverzahnungsabschnitt 112 ausgebildet. Die Außensteckverzahnung 112 weist mehrere Zähne 113 auf, die ausgehend von einer kreiszylindrischen Mantelfläche radial auswärts gerichtet und in Umfangsrichtung zueinander beabstandet sind. In dem gezeigten Ausführungsbeispiel sind sechs Zähne 113 vorgesehen, die in Umfangsrichtung gleichmäßig verteilt an der Mantelfläche des axialen Endabschnitts 111 angeordnet sind. Ferner ist ein Doppelzahn 113a/113b vorgesehen, um den Schaltsensor 130 winkelgenau auf der Schaltwelle 110 anordnen bzw. mit dieser verbinden zu können.

Der Schaltsensor 130 wird drehfest mit der Schaltwelle 110 verbunden, was durch formschlüssigen Eingriff der zur Außensteckverzahnung 112 der Schaltwelle 110 gehörenden Zähne 113 in die zur Innensteckverzahnung 132 des Schaltsensors 130 gehörenden Kerben 133 erfolgt, wobei eine spielfreie Steckverzahnungsverbindung ausgebildet wird. Indem der Doppelzahn 113a/113b an der Schaltwelle 110 in die Doppelkerbe 133a/133b am Schaltsensor 130 eingreift, wird eine winkelgenaue Ausrichtung des Schaltsensors 130 auf der Schaltwelle 110 herbeigeführt.

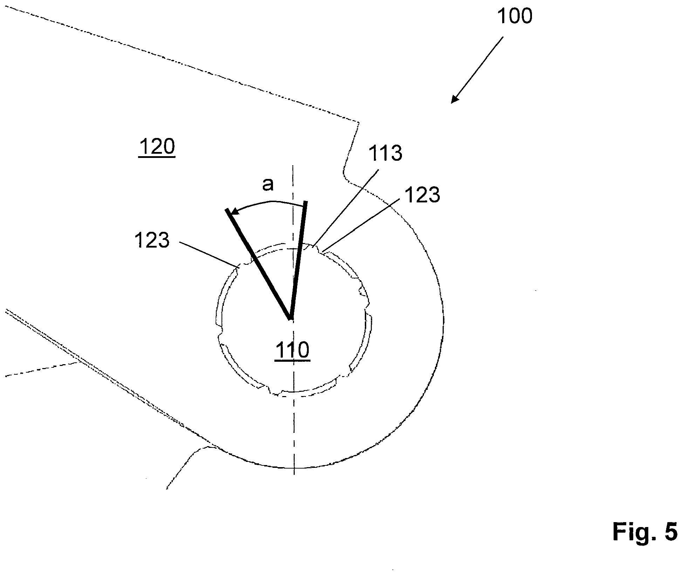

Auch der Schalthebel 120 wird mittels Steckverzahnungsverbindung mit der Schaltwelle 110 verbunden, wobei jedoch vorgesehen ist, dass diese Steckverzahnungsverbindung ein Drehspiel aufweist, wodurch ein bedingter Drehfreilauf der Schaltwelle 110 relativ zum Schalthebel 120 und/oder umgekehrt ermöglicht ist. Dies wird nachfolgend anhand der Fig. 5 erläutert.

Fig. 5 zeigt den mittels Steckverzahnungsverbindung mit der Schaltwelle 110 verbundenen Schalthebel 120 in einer axialen Draufsicht (Blickrichtung entlang der Achse L). Die Steckverzahnungsverbindung ist durch den formschlüssigen Eingriff der an der Schaltwelle 110 vorhandenen Außensteckverzahnung 112 und der am Schalthebel 120 vorhandenen Innensteckverzahnung 122 realisiert, wobei sich die Zähne 113 und 123 in radialer Richtung überdecken. Die Zahnhöhen der jeweiligen Zähne 113 und 123 sind aufeinander abgestimmt.

Wie bereits obenstehend erläutert, sind sowohl die radial auswärts gerichteten Zähne 113 an der Schaltwelle 110 als auch die radial einwärts gerichteten Zähne 123 am Schalthebel 120 in Umfangsrichtung zueinander beabstandet. Die hierdurch gebildeten Zahnzwischenräume ermöglichen einen bedingten Drehfreilauf zwischen der Schaltwelle 110 und dem Schalthebel 120.

In der in Fig. 5 gezeigten Darstellung befinden sich die Zähne 113 der Schaltwelle 110 in Berührungskontakt mit den Zähnen 123 des Schalthebels 120. Dieser dargestellte Zustand kann bspw. durch Federkraftbeaufschlagung der Schaltwelle 110 herbeigeführt werden. Einerseits können nun zwischen der Schaltwelle 110 und dem Schalthebel 120 jeweils in eine Richtung Drehmomente übertragen werden. Andererseits kann sich die Schaltwelle 110 aus der dargestellten Position heraus und bei feststehendem Schalthebel 120 entgegen dem Uhrzeigersinn um den Drehwinkel bzw. Verdrehwinkel a verdrehen, bis die Zähne 113 der Schaltwelle 110 an die in Drehrichtung benachbarten Zähne 123 des Schalthebels 120 anschlagen (wobei alle Zähne gleichzeitig anschlagen bzw. sich zeitgleich im Berührungskontakt befinden). Zwischen der Schaltwelle 110 und dem Schalthebel 120 können nun jeweils in die andere Richtung Drehmomente übertragen werden. In analoger Weise kann sich die Schaltwelle 110 bei feststehendem Schalthebel 120 auch wieder in die gezeigte Position zurückdrehen.

Die zwischen der Schaltwelle 110 und dem Schalthebel 120 bestehende Steckverzahnungsverbindung verfügt somit sowohl über eine Mitnahmefunktion als auch über eine bedingte bzw. begrenzte Freilauffunktion, die bei feststehendem Schalthebel 120 innerhalb des Drehwinkels a einen Drehfreilauf für die Schaltwelle 110 ermöglicht. (Ebenso könnte der Drehfreilauf natürlich auch dazu genutzt werden, den Schalthebel 120 bei feststehender Schaltwelle 110 bedingt verschwenken zu können.) Der Drehwinkel a kann über die Anzahl der in Umfangsrichtung zueinander beabstandeten Zähne 113 bzw. 123 und/oder durch deren Zahnbreite konstruktiv vorgegeben werden. Der Drehwinkel a ist so dimensioniert, dass dieser für die eingangs genannten Betriebssituationen (in denen eine relative Drehbewegung zwischen der Schaltwelle 110 und dem Schalthebel 120 und insbesondere ein Verdrehen der Schaltwelle 110 bei feststehendem Schalthebel 120 erforderlich ist) ausreichend ist. In dem gezeigten Beispiel beträgt der Drehwinkel a in etwa 50°. Die Zähne 113 und 123 sind bezüglich dem Umfang schmal dimensioniert.

Über ein und dieselbe Außensteckverzahnung 112 an der Schaltwelle 110 kann somit sowohl eine drehfeste Verbindung mit dem Schaltsensor 130 als auch eine mit Drehfreilauf versehene Verbindung mit dem Schalthebel 120 realisiert werden, ohne dass hierfür zusätzliche Bauteile (bspw. Passfedern, Stifte, Freiläufe etc.) erforderlich sind. Der Außensteckverzahnungsabschnitt 112 an der Schaltwelle 110 ist mit einer entsprechenden axialen Länge ausgebildet.

## Patentansprüche

1. Schaltvorrichtung (100) für ein Kraftfahrzeug-Getriebe, insbesondere für ein Kraftfahrzeug-Automatikgetriebe, mit einer zum Getriebe führenden Schaltwelle (110) und mit einem Schalthebel (120) zum Betätigen der Schaltwelle (110), wobei die Schaltwelle (110) und der Schalthebel (120) mittels Steckverzahnungsverbindung miteinander verbunden sind, **dadurch gekennzeichnet, dass** die Steckverzahnungsverbindung mit einem Drehspiel ausgebildet ist, wodurch ein bedingter Drehfreilauf der Schaltwelle (110) bei feststehendem Schalthebel (120) mit einem Drehwinkel (a) von 40° bis 60° ermöglicht ist.

2. Schaltvorrichtung (100) nach Anspruch 1, **dadurch gekennzeichnet, dass** der bedingte Drehfreilauf einen Drehwinkel (a) von 50° aufweist.

3. Schaltvorrichtung (100) nach Anspruch 1 oder 2, **dadurch gekennzeichnet, dass** die Steckverzahnungsverbindung eine am Schalthebel (120) ausgebildete Innensteckverzahnung (122) und eine an der Schaltwelle (110) ausgebildete Außensteckverzahnung (112) umfasst, wobei die auf einer kreiszylindrischen Kontur basierende Innensteckverzahnung (122) mehrere radial einwärts gerichtete und in Umfangsrichtung zueinander beabstandete Zähne (123) aufweist und wobei die ebenfalls auf einer kreiszylindrischen Kontur basierende Außensteckverzahnung (112) mehrere radial auswärts gerichtete und ebenfalls in Umfangsrichtung zueinander beabstandete Zähne (113) aufweist.

4. Schaltvorrichtung (100) nach Anspruch 3, **dadurch gekennzeichnet, dass** die Zähne (113, 123) der Außensteckverzahnung (112) und der Innensteckverzahnung (122) in Umfangsrichtung mit gleichmäßigen Zwischenräumen ausgebildet sind.

5. Schaltvorrichtung (100) nach Anspruch 3 oder 4, **dadurch gekennzeichnet, dass** die Außensteckverzahnung (112) und die Innensteckverzahnung (122) jeweils 4 bis 8 und insbesondere jeweils 6 Zähne aufweisen.

6. Schaltvorrichtung (100) nach einem der vorhergehenden Ansprüche, **dadurch gekennzeichnet, dass** diese auch einen Schaltsensor (130) aufweist, der drehfest mit der Schaltwelle (110) verbunden ist.

7. Schaltvorrichtung (100) nach Anspruch 6, **dadurch gekennzeichnet, dass** die Schaltwelle (110) und der Schaltsensor (130) mittels Steckverzahnungsverbindung miteinander verbunden sind, wobei die Steckverzahnungsverbindung eine am Schaltsensor (130) ausgebildete Innensteckverzahnung (132) und eine an der Schaltwelle (110) ausgebildete Außensteckverzahnung (112) umfasst, wobei die auf einer kreiszylindrischen Kontur basierende Innensteckverzahnung (132) mehrere radial auswärts gerichtete und in Umfangsrichtung zueinander beabstandete Kerben (133) aufweist und wobei die ebenfalls auf einer kreiszylindrischen Kontur basierende Außensteckverzahnung (112) mehrere radial auswärts gerichtete und ebenfalls in Umfangsrichtung zueinander beabstandete Zähne (113) aufweist und über dieselbe Außensteckverzahnung (112) an der Schaltwelle (110) sowohl die drehfeste Verbindung mit dem Schaltsensor (130) als auch die mit Drehfreilauf versehene Verbindung mit dem Schalthebel (120) realisiert ist.

8. Schaltvorrichtung (100) nach Anspruch 7, **dadurch gekennzeichnet, dass** eine winkelgenaue Ausrichtung zwischen dem Schaltsensor (130) und der Schaltwelle (110) durch einen an der Außensteckverzahnung (112) ausgebildeten Doppelzahn (113a/113b) und eine an der Innensteckverzahnung (132) ausgebildete Doppelkerbe (133a/133b) vorgegeben ist.

9. Kraftfahrzeug-Getriebe und insbesondere Kraftfahrzeug-Automatikgetriebe umfassend eine Schaltvorrichtung (100) gemäß einem der vorausgehenden Ansprüche.

10. Kraftfahrzeug-Getriebe nach Anspruch 9, **dadurch gekennzeichnet, dass** es sich um ein Shift-by-Wire-Getriebe handelt.

## Claims

1. Switching device (100) for a motor vehicle transmission, in particular for a motor vehicle automatic transmission, having a switching shaft (110) leading to the transmission and having a switching lever (120) to actuate the switching shaft (110), wherein the switching shaft (110) and the switching lever (120) are connected to one another by means of a plug interlocking connection, **characterised in that** the plug interlocking connection is formed with rotational play, whereby a limited rotational free run of the switching shaft (110) is enabled in the case of fixed switching lever (120) at a rotational angle (a) of 40° to 60°.

2. Switching device (100) according to claim 1, **characterised in that** the limited rotational free run has a rotational angle (a) of 50°.

3. Switching device (100) according to claim 1 or 2, **characterised in that** the plug interlocking connection comprises an inner plug interlocking (122) formed on the switching lever (120) and an outer plug interlocking (112) formed on the switching shaft (110), wherein the inner plug interlocking (122) based on a circular cylindrical contour has a plurality of teeth (123) directed radially inwardly and spaced from one another in the circumferential direction and wherein the outer plug interlocking (112) similarly based on a circular cylindrical contour has a plurality of teeth (113) directed radially outwardly and similarly spaced from one another in the circumferential direction.

4. Switching device (100) according to claim 3, **characterised in that** the teeth (113, 123) of the outer plug interlocking (112) and the inner plug interlocking (122) are formed with uniform intermediate spaces in the circumferential direction.

5. Switching device (100) according to claim 3 or 4, **characterised in that** the outer plug interlocking (112) and the inner plug interlocking (122) respectively have 4 to 8 and in particular respectively 6 teeth.

6. Switching device (100) according to any one of the preceding claims, **characterised in that** it also has a switching sensor (130) which is connected in a torque proof manner to the switching shaft (110).

7. Switching device (100) according to claim 6, **characterised in that** the switching shaft (110) and the switching sensor (130) are connected to one another by means of plug interlocking connection, wherein the plug interlocking connection comprises an inner plug interlocking (132) formed on the switching sensor (130) and an outer plug interlocking (112) formed on the switching shaft (110), wherein the inner plug interlocking (132) based on a circular cylindrical contour has a plurality of notches (133) directed radially inwardly and spaced from one another in the circumferential direction and wherein the outer plug interlocking (112) similarly based on a circular cylindrical contour has a plurality of teeth (113) directed radially inwardly and similarly spaced from one another in the circumferential direction and both the torque-proof connection to the switching sensor (130) and the connection provided with rotational free run to the switching lever (120) is implemented via the same outer plug interlocking (112) on the switching shaft (110).

8. Switching device (100) according to claim 7, **characterised in that** an angularly-exact alignment between the switching sensor (130) and the switching shaft (110) is predefined by a double tooth (113a/113b) formed on the outer plug interlocking (112) and a double notch (133a/133b) formed on the inner plug interlocking (132).

9. Motor vehicle transmission and in particular motor vehicle automatic transmission comprising a switching device (100) according to any one of the preceding claims.

10. Motor vehicle transmission according to claim 9, **characterised in that** it is a shift by wire transmission.

## Revendications

1. Dispositif de changement de vitesse (100) pour une boîte de vitesses pour véhicule à moteur, en particulier pour une boîte de vitesses automatique pour véhicule à moteur, avec un arbre de changement de vitesse (110) conduisant à la boîte de vitesses et avec un levier de changement de vitesse (120) pour l'actionnement de l'arbre de changement de vitesse (110), dans lequel l'arbre de changement de vitesse (110) et le levier de changement de vitesse (120) sont reliés entre eux au moyen d'une liaison dentée d'enfichage, **caractérisé en ce que** la liaison dentée d'enfichage est réalisée avec un jeu de rotation, ce par quoi une roue libre rotative conditionnée de l'arbre de changement de vitesse (110) est possible en cas de levier de changement de vitesse (120) fixe avec un angle de rotation (a) de 40° à 60°.

2. Dispositif de changement de vitesse (100) selon la revendication 1, **caractérisé en ce que** la roue libre rotative conditionnée présente un angle de rotation (a) de 50°.

3. Dispositif de changement de vitesse (100) selon la revendication 1 ou 2, **caractérisé en ce que** la liaison dentée d'enfichage comprend une denture d'enfichage intérieure (122) réalisée sur le levier de changement de vitesse (120) et une denture d'enfichage extérieure (112) réalisée sur le levier de changement de vitesse (110), dans lequel la denture d'enfichage intérieure (122) basée sur un contour en forme de cylindre circulaire présente plusieurs dents (123) dirigées radialement vers l'intérieur et espacées l'une de l'autre dans la direction circonférentielle et dans lequel la denture d'enfichage extérieure (112) également basée sur un contour en forme de cylindre circulaire présente plusieurs dents (113) dirigées radialement vers l'extérieur et également espacées l'une de l'autre dans la direction circonférentielle.

4. Dispositif de changement de vitesse (100) selon la revendication 3, **caractérisé en ce que** les dents (113, 123) de la denture d'enfichage extérieure (112) et de la denture d'enfichage intérieure (122) sont réalisées dans la direction circonférentielle avec des espaces uniformes.

5. Dispositif de changement de vitesse (100) selon la revendication 3 ou 4, **caractérisé en ce que** la denture d'enfichage extérieure (112) et la denture d'enfichage intérieure (122) présentent respectivement 4 à 8 et en particulier respectivement 6 dents.

6. Dispositif de changement de vitesse (100) selon l'une quelconque des revendications précédentes, **caractérisé en ce que** celui-ci présente également un capteur de changement de vitesse (130), qui est relié solidaire en rotation à l'arbre de changement de vitesse (110).

7. Dispositif de changement de vitesse (100) selon la revendication 6, **caractérisé en ce que** l'arbre de changement de vitesse (110) et le capteur de changement de vitesse (130) sont reliés l'un à l'autre au moyen d'une liaison dentée d'enfichage, dans lequel la liaison dentée d'enfichage comprend une denture d'enfichage intérieure (132) réalisée sur le capteur de changement de vitesse (130) et une denture d'enfichage extérieure (112) réalisée sur l'arbre de changement de vitesse (110), dans lequel la denture d'enfichage intérieure (132) basée sur un contour en forme de cylindre circulaire présente plusieurs encoches (133) dirigées radialement vers l'extérieur et espacées l'une de l'autre dans la direction circonférentielle et dans lequel la denture d'enfichage extérieure (112) également basée sur un contour en forme de cylindre circulaire présente plusieurs dents (113) dirigées radialement vers l'extérieur et également espacées l'une de l'autre dans la direction circonférentielle et aussi bien la liaison solidaire en rotation avec le capteur de commutation (130) que la liaison dotée d'une roue libre rotative avec le levier de changement de vitesse (120) sont réalisées via la même denture d'enfichage extérieure (112) au niveau de l'arbre de changement de vitesse (110).

8. Dispositif de changement de vitesse (100) selon la revendication 7, **caractérisé en ce qu'**une orientation à angle précis entre le capteur de changement de vitesse (130) et l'arbre de changement de vitesse (110) est prédéfinie par une double dent (113a/113b) réalisée au niveau de la denture d'enfichage extérieure (112) et une double encoche (133a/133a) réalisée au niveau de la denture d'enfichage intérieure (132).

9. Boîte de vitesses pour véhicule à moteur et en particulier boîte de vitesses automatique pour véhicule à moteur comprenant un dispositif de changement de vitesse (100) selon l'une quelconque des revendications précédentes.

10. Boîte de vitesses pour véhicule à moteur, selon la revendication 9, **caractérisé en ce qu'**il s'agit d'une boîte de vitesses shift-by-wire.
